# EUROPEAN PATENT APPLICATION

(11) **EP 3 076 688 A1**
(43) Date of publication of application: **05.10.2016**
(21) Application number: 16163262.5
(22) Date of filing: 31.03.2016
(51) Int. Cl.: H04W 4/00, G06F 9/44, H04W 4/06

(54) **WIRELESS BROADCASTING OF CONFIGURATION DATA**

(30) Priority: 31.03.2015 GB 201505586
(71) Applicant: Quatro Electronics Limited, London WC2B 6ST (GB)
(72) Inventor: WILLIAMSON, Steve, Blackpool, Lancashire FY2 0TR (GB)
(74) Representative: Midgley, Jonathan Lee

(57) **Abstract**

A method, a system, a controller and an apparatus are provided for managing distribution of configuration data to devices. Such a system includes a plurality of devices and a controller. The controller wirelessly broadcasts a polling signal to determine how many devices are within range of the controller. The devices that are within range receive the polling signal. Each device responds to the polling signal by sending a return signal. The received signal strength of the polling signal at the device and/or of the return signal at the controller are used to determine if a device is to be allocated to an update group. The controller sends a notification signal to the devices that have been allocated to the update group to notify them of their allocation to the group. The allocated devices are switched into a reception mode. The controller wirelessly broadcasts configuration data, which is received at the allocated devices. The configuration data is processed in the devices, if they are in the reception mode.

## Description

### Field of the Invention

This invention relates to methods and apparatus for providing configuration data to a plurality of devices. In particular, it relates to methods and apparatus for wirelessly broadcasting configuration data from a controller for reception by a number of devices.

### Background of the Invention

Modern devices often comprise storage means for storing configuration data, such as firmware, to enable the devices to perform certain processes. For example, certain configuration data may initially be installed on a device to enable testing of the device. This configuration data may comprise testing firmware which enables diagnostic processes to be performed on the device, or which provides information about the health or functionality of the device and its components.

During manufacturing or when manufacturing of the device has been completed, the manufacturer of the device might wish to update the configuration data on the device. The manufacturer may, for example, determine that the device hardware is functioning correctly and that the testing firmware should be replaced by or supplemented with different or updated firmware. The manufacturer may wish to install updated firmware to provide new or different functionality (e.g. to customise the product for a particular end-user), to correct an error in firmware previously installed on the device, or to enable performance of further diagnostic processes.

Installing configuration data such as firmware on a device typically requires a physical connection to be made between the device and a controller comprising device-updating software. Making the physical connection typically requires human input, which increases production costs. Furthermore, it is sometimes necessary to disassemble the device, if the device's connector is an internal connector, adding more time to the process. It can also be necessary to remove the device from its packaging if, for example, the product has already been prepared for sending to a vendor or end-user.

The updating process is also time-consuming when a plurality of devices must be updated. Although some systems allow connection of several devices to one controller for updating, the time spent connecting the devices to the controller and disconnecting the devices from the controller remains a significant overhead.

### Summary of Invention

Therefore, according to the present invention there is provided a method for managing distribution of configuration data to devices, the method comprising: wirelessly broadcasting a polling signal from a controller; receiving the polling signal at a plurality of said devices; responding to the polling signal by sending a return signal from each of the plurality of said devices; allocating one or more of the devices to an update group, wherein a device is allocated to said update group based upon at least one of: the received signal strength of the polling signal measured at said device, and the received signal strength of the return signal from the said device measured at the controller; sending a notification signal from the controller to the allocated devices in the update group for notifying the devices of their allocation to the group; switching the allocated devices in the update group into a reception mode; wirelessly broadcasting configuration data from the controller; receiving the configuration data at the allocated devices; and processing the configuration data in said allocated devices, if the allocated devices are in the reception mode.

This method allows a single controller to distribute configuration data to multiple devices without requiring a physical connection to any of the devices or input at any of the devices. Furthermore, the single controller can cause the multiple devices to process the configuration data automatically.

Optionally, the method further comprises measuring the received signal strength of the polling signal at each of the plurality of said devices. The return signal (from each of the plurality of devices) preferably includes an indication of the received signal strength of the polling signal at the respective device. This allows the devices to provide indications to the controller of whether they are sufficiently near the controller and/or have sufficient signal strength to reliably receive configuration data.

Optionally, the method further comprises measuring the received signal strengths of the return signals at the controller. This allows the controller to independently determine whether the devices are sufficiently near the controller and have sufficient signal strength to reliably receive configuration data, or to check whether this is the case based on indications received from the devices. The determination of whether a device is allocated to an update group may be based on the signal strength of the polling signal measured by the device as well as the received signal strength of the return signal from the controller.

Preferably, the reception mode is a boot loader mode for receiving firmware. This allows the devices to receive configuration data in the form of firmware, which may then be processed by the devices.

Processing the configuration data may include performing a data validation operation on the received configuration data. This allows the devices to check whether they have received the configuration data completely and/or correctly.

The data validation operation may include a hashing operation. This allows the devices to generate a representation of the configuration data received, e.g. for comparison with a representation of the configuration data that was in fact broadcast or intended to be broadcast.

Preferably, the devices generate and send hashes to the controller and the controller checks the hashes generated by the devices to verify the integrity of the received configuration data. This allows the controller to be sure that the devices have correctly received the configuration data. The controller could then store in a database information about whether the devices have correctly received the configuration data.

The method may further comprise switching one or more devices in the update group into a run-time mode. This allows the devices to activate the newly-received firmware automatically.

According to the present invention, there is also provided a system for managing distribution of configuration data, the system comprising a controller and a plurality of devices, wherein: each of the plurality of devices is configured to: receive a polling signal; and respond to the polling signal by sending a return signal, and the controller is configured to: wirelessly broadcast a polling signal; allocate one or more of the devices to an update group, wherein a device is allocated to said update group based upon at least one of: the received signal strength of the polling signal measured at said device, and the received signal strength of the return signal from the said device measured at the controller; send a notification signal for notifying said allocated devices of their allocation to the group; and wirelessly broadcast configuration data, wherein said devices are further configured to: receive said notification signal and switch into a reception mode if the devices are included in said update group; and receive and process the wirelessly broadcast configuration data if the devices are in said reception mode.

Each of the devices may include means for measuring the received signal strength of the polling signal at the respective device. Each device may be arranged to include an indication of the received signal strength of the polling signal in the respective device's return signal.

The controller may include means for measuring the received signal strengths of the return signals at the controller.

The reception mode is preferably a boot loader mode for receiving firmware.

The processing of the wirelessly broadcast configuration data may include performing a data validation operation on the received configuration data.

The data validation operation may include a hashing operation. Optionally, each of the plurality of devices is configured to generate and send a hash to the controller, and the controller is configured to check the hashes generated by the devices to verify the integrity of the received configuration data.

The devices in the update group may be configured to be switched into a run-time mode.

The present invention may also provide a controller comprising: means for wirelessly broadcasting a polling signal; means for receiving return signals; means for allocating one or more of the devices to an update group, wherein a device is allocated to said update group based upon at least one of: the received signal strength of the polling signal measured at said device, and the received signal strength of the return signal from the said device measured at the controller; means for sending a notification signal for notifying said allocated devices of their allocation to the group; and means for wirelessly broadcasting configuration data.

The controller may include means for measuring the received signal strengths of the return signals at the controller.

The present invention may further provide an apparatus comprising: means for receiving a polling signal from a controller; means for responding to the polling signal by sending a return signal; means for receiving a notification signal for notifying an apparatus of its allocation to an update group and for switching the apparatus to a reception mode if said notification message indicates that the apparatus is included in the update group; and means for receiving and processing wirelessly broadcast configuration data from the controller, if the apparatus is in the reception mode.

Optionally, the apparatus includes means for measuring the received signal strength of the polling signal at the apparatus. The return signal may include an indication of the received signal strength of the polling signal.

### Brief Description of the Drawing

The present invention will now be described in more detail by way of non-limiting examples by reference to the attached drawing, in which:

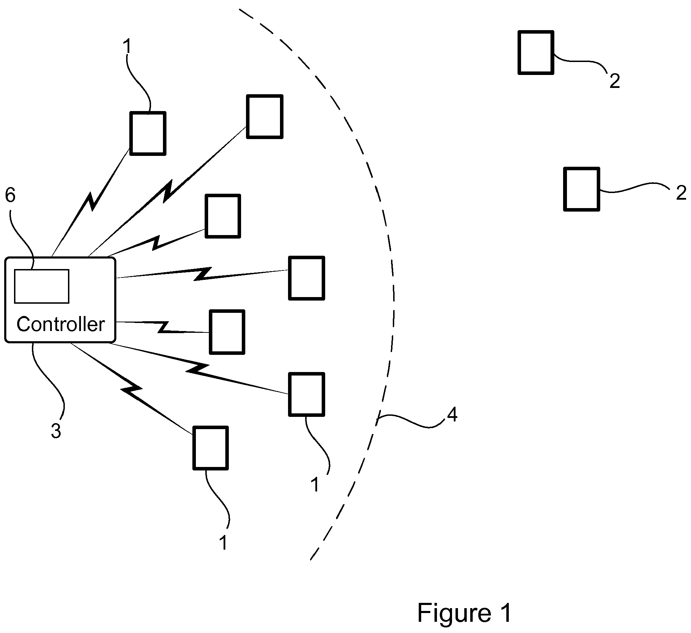

Figure 1 shows a schematic view of a system comprising a plurality of devices and a controller.

### Description of the Preferred Embodiments

Figure 1 illustrates an embodiment comprising a plurality of devices 1 and a controller 3. The devices 1 and controller 3 are collocated in a manufacturing or production environment. The devices 1 have reached the end of a manufacturing process.

The devices 1 include storage means on which is stored configuration data, such as firmware. Each device 1 includes an indicator for indicating that certain steps have been completed or for indicating that the device is in a particular mode. For example, the indicator may be used to indicate that the device has successfully completed diagnostic processes enabled by its current configuration data. In this embodiment, the indicator is a light emitting diode (LED) which is switched on when the diagnostic processes have been successfully completed. Each of the devices 1 comprises means for wirelessly receiving and sending signals comprising data, such as a Wi-Fi, Bluetooth, near field communication (NFC) or infrared receiver, or a receiver for a proprietary protocol.

The operation of the embodiment will now be described. The operator of the controller 3 wishes to install configuration data on the devices 1. The operator uses controller 3 to wirelessly broadcast a polling signal. In the illustrated embodiment, each of the devices 1 includes means for measuring the received signal strength of a signal received at the apparatus. Each of the devices 1 receives the polling signal and measures a received signal strength of the polling signal at the device 1.

The devices 1 respond to the polling signal by each sending a return signal. In the illustrated embodiment, the return signals include indications of the measured received signal strengths of the polling signal at the devices 1.

The controller 3 receives the return signals from the devices 1. The controller 3 determines, from the number of return signals received, how many devices 1 are within the range 4 of the controller 3. The range 4 of the controller 3 may be, for example, between 1 and 10 metres. In particular, it may be between 2 and 3 metres. The controller 3 indicates, using a display 6 associated with the controller 3, the number of devices 1 determined to be within the range 4 of the controller 3. Devices 2 outside the range 4 of the controller 3 will not be included.

The controller 3 allocates one or more of the devices 1 to an update group. In the illustrated example, the controller 3 performs this allocation based on the indications of received signal strengths included in the return signals. The controller 3 compares each of the indications of received signal strength against a threshold signal strength. The controller 3 determines from the comparison which of the plurality of devices 1 should be allocated to the update group. The devices whose indications of received signal strength indicate a signal strength above the threshold signal strength are allocated to the update group. The controller 3 indicates, using the display 6 associated with the controller 3, the number of devices 1 allocated to the update group.

The controller 3 sends a notification signal for notifying the devices in the update group that they have been allocated to the group. In response to the notification signal, the allocated devices are switched into a boot loader mode in which they can receive and process configuration data.

The allocated devices use their indicators to provide indications that they have been switched into a boot loader mode.

The controller 3 wirelessly broadcasts configuration data. The configuration data comprises firmware which is to be installed on the allocated devices in the update group.

The one or more allocated devices, after being switched into the boot loader mode, automatically begin receiving and processing the broadcast configuration data from the controller 3. No user input is required at the devices to enable the reception and processing of the configuration data by the allocated devices when the devices are in the boot loader mode.

After the configuration data is received, a data validation operation is performed on the received configuration data. The data validation operation includes a hashing operation. Each allocated device in the update group generates a hash representing the received configuration data. The controller 3 checks the hashes generated by the allocated devices.

Each allocated device that is determined to have generated the correct hash is switched from the boot loader mode into a run-time mode. An allocated device may switch from boot loader mode into run-time mode in response to a signal from the controller instructing the device to switch into the run-time mode, or may switch from boot loader mode into run-time mode automatically after a period of time has elapsed in which the device has not heard from the controller that the device should not switch into run-time mode. A device may for example wait a predetermined number of seconds, minutes or hours after generating and/or sending the hash to see if an instruction not to enter run-time mode is received from the controller. If no such instruction is received in the predetermined period of time, the device may switch into run-time mode automatically.

Switching into a run-time mode corresponds to activating the newly installed configuration data (firmware). Each allocated device uses its indicator to provide an indication that it has switched into the run-time mode.

Each allocated device that is determined to have generated an incorrect hash is recorded by the controller 3 in a list or database for remedial action. The controller 3 may additionally send a signal to the allocated devices that have generated incorrect hashes to cause those allocated devices to provide indications that remedial action is required.

Although the above description describes an embodiment in which a manufacturer updates devices in a manufacturing environment, the updating could alternatively be carried out by a vendor or end-user of the devices. The updating could be carried out in any location where a controller and a plurality of devices can be collocated. The process could for example be carried out in a warehouse, shop or other location.

While the devices described above have an indicator which is an LED, in other embodiments the indicator may be one or more of: a buzzer, a speaker, a filament bulb, an LCD or LED screen, or any other suitable means for indicating. In some embodiments, the devices may not include indicators, and all information indicated by the indicators in the above embodiment (e.g. about the statuses of the devices) may be communicated to the controller in signals sent wirelessly from the devices.

In the above embodiment, each of the devices 1 receives the polling signal and measures the received signal strength of the polling signal at the device. Each of the devices then sends return signals including indications of the measured received signal strength of the polling signal.

In other embodiments of the invention, the devices 1 do not include means for measuring received signal strengths. In such embodiments, the controller 3 may instead include means for measuring received signal strengths and may measure the received signal strengths of the return signals from the devices 1 at the controller 3. In these embodiments, the return signals from the devices do not include indications of received signal strengths measured at the devices. Instead the controller 3 uses the signal strengths that it measures to determine how many devices 1 are within the range 4 of the controller 3, and/or to determine which devices 1 should be allocated to the update group.

In other embodiments, both the controller and the devices may include means for measuring received signal strength. In these embodiments, received signal strengths measured by the devices as well as received signal strengths measured by the controller may be used to determine how many devices are within the range of the controller, and/or to determine which devices should be allocated to the update group.

In some embodiments, the return signals sent by the devices 1 include information about the configuration data currently installed on the devices 1. The controller 3 compares the information about the currently installed configuration data with information about the configuration data the controller 3 has been instructed to install on the devices 1. If the information about the configuration data currently installed on the devices 1 indicates that one or more of the devices 1 already has the configuration data that the controller 3 has been instructed to install on the devices 1, the controller 3 does not add those devices to the update group, or removes those devices from the group if they have already been added to the group.

Although in the above embodiment devices in an update group are switched into a boot loader mode in response to a notification signal sent by a controller, in other embodiments devices may be switched into a boot loader mode by a button press or combination of button presses entered at the devices themselves.

In the embodiment described above, the allocated devices use their indicators to provide indications that they have been switched into a boot loader mode. In other embodiments, the devices could alternatively or additionally transmit a signal to the controller 3 wirelessly to inform the controller 3 that they have been switched into the boot loader mode.

In some embodiments, the allocated devices in the update group check their generated hashes themselves instead of controller 3 checking the generated hashes of each of the allocated devices. In these embodiments, each allocated device in the update group receives a file comprising the correct hash and compares its own generated hash with the correct hash. If an allocated device determines that it has generated the correct hash, the allocated device is switched from the boot loader mode into a run-time mode. If an allocated device determines that it has not generated the correct hash, the allocated device uses its indicator and/or sends a further signal to the controller wirelessly to provide an indication that remedial action is required.

In some embodiments, the data validation operation may include an alternative form of error detection operation, an error correction operation, or a combination of an error detection operation and an error correction operation.

Although in the above embodiment each allocated device uses its indicator to provide an indication that it has switched into the run-time mode, in other embodiments, the allocated devices may additionally or alternatively notify the controller 3 that they have switched into the run-time mode by means of a signal sent wirelessly from the devices to the controller.

The signals sent by the devices to the controller may enable the controller to maintain a database recording which devices have successfully received configuration data, which devices have successfully switched into run-time mode, which devices need remedial action, and/or other data about the devices. In the embodiments where the devices do not include indicators (e.g. LEDs), or where the devices are enclosed in packaging and their indicators are therefore obscured, the operator of the controller may compare an identifier (such as a MAC address or other unique identifier) in the database with a MAC address (or other identifier) on the exterior of the device or its packaging. In this way, the operator of the controller can identify which devices have been updated and which devices need remedial action even though the devices do not have indicators or their indicators are obscured.

Although the configuration data in the above description has been described as firmware, in other embodiments the configuration data may additionally or alternatively include other types of data such as software, configuration files and/or settings files.

## Claims

1. A method for managing distribution of configuration data to devices, the method comprising:
wirelessly broadcasting a polling signal from a controller;
receiving the polling signal at a plurality of said devices;
responding to the polling signal by sending a return signal from each of the plurality of said devices;
allocating one or more of the devices to an update group, wherein a device is allocated to said update group based upon at least one of: the received signal strength of the polling signal measured at said device, and the received signal strength of the return signal from the said device measured at the controller;
sending a notification signal from the controller to the allocated devices in the update group for notifying the devices of their allocation to the group;
switching the allocated devices in the update group into a reception mode;
wirelessly broadcasting configuration data from the controller;
receiving the configuration data at the allocated devices; and
processing the configuration data in said allocated devices, if the allocated devices are in the reception mode.

2. A method as claimed in claim 1, further comprising measuring the received signal strength of the polling signal at each of the plurality of said devices, wherein each return signal includes an indication of the received signal strength of the polling signal at the respective device.

3. A method as claimed in claim 1 or 2, further comprising measuring the received signal strengths of the return signals at the controller.

4. A method as claimed in claim 1, 2 or 3, wherein said reception mode is a boot loader mode for receiving firmware.

5. A method as claimed in any preceding claim, comprising switching one or more devices in the update group into a run-time mode.

6. A system for managing distribution of configuration data, the system comprising a controller and a plurality of devices, wherein:
each of the plurality of devices is configured to:
receive a polling signal; and
respond to the polling signal by sending a return signal, and
the controller is configured to:
wirelessly broadcast a polling signal;
allocate one or more of the devices to an update group, wherein a device is allocated to said update group based upon at least one of: the received signal strength of the polling signal measured at said device, and the received signal strength of the return signal from the said device measured at the controller;
send a notification signal for notifying said allocated devices of their allocation to the group; and
wirelessly broadcast configuration data,
wherein said devices are further configured to:
receive said notification signal and switch into a reception mode if the devices are included in said update group; and
receive and process the wirelessly broadcast configuration data if the devices are in said reception mode.

7. A system as claimed in claim 6, wherein each of the devices includes means for measuring the received signal strength of the polling signal at the respective device, and wherein each device is arranged to include an indication of the received signal strength of the polling signal in the respective device's return signal.

8. A system as claimed in claim 6 or 7, wherein the controller includes means for measuring the received signal strengths of the return signals at the controller.

9. A system as claimed in claim 6, 7 or 8, wherein said reception mode is a boot loader mode for receiving firmware.

10. A system as claimed in any one of claims 6 to 9, wherein the devices in the update group are configured to be switched into a run-time mode.

11. A controller comprising:
means for wirelessly broadcasting a polling signal;
means for receiving return signals;
means for allocating one or more of the devices to an update group, wherein a device is allocated to said update group based upon at least one of: the received signal strength of the polling signal measured at said device, and the received signal strength of the return signal from the said device measured at the controller;
means for sending a notification signal for notifying said allocated devices of their allocation to the group; and
means for wirelessly broadcasting configuration data.

12. A controller as claimed in claim 11, including means for measuring the received signal strengths of the return signals at the controller.

13. An apparatus comprising:
means for receiving a polling signal from a controller;
means for responding to the polling signal by sending a return signal;
means for receiving a notification signal for notifying an apparatus of its allocation to an update group and for switching the apparatus to a reception mode if said notification message indicates that the apparatus is included in the update group; and
means for receiving and processing wirelessly broadcast configuration data from the controller, if the apparatus is in the reception mode.

14. An apparatus as claimed in claim 13, including means for measuring the received signal strength of the polling signal at the apparatus.

15. An apparatus as claimed in claim 14, wherein the return signal includes an indication of the received signal strength of the polling signal.
